**Europäisches Patentamt**

**European Patent Office**

**Office européen des brevets**

(19)

(11) Veröffentlichungsnummer: **0 016 721**
**B1**

(12) # EUROPÄISCHE PATENTSCHRIFT

(45) Veröffentlichungstag der Patentschrift:
28.09.83

(51) Int. Cl.³: **G 01 B 7/28**

(21) Anmeldenummer: **80810006.9**

(22) Anmeldetag: **08.01.80**

(54) **Zahnradmessmaschine.**

(30) Priorität: **19.01.79 CH 548/79**

(43) Veröffentlichungstag der Anmeldung:
**01.10.80 Patentblatt 80/20**

(45) Bekanntmachung des Hinweises auf die Patenterteilung:
**28.09.83 Patentblatt 83/39**

(84) Benannte Vertragsstaaten:
**CH DE FR GB IT NL SE**

(56) Entgegenhaltungen:
**DE-A-2 064 277**
**DE-A-2 333 502**
**DE-A-2 364 916**
**US-A-3 741 659**

(73) Patentinhaber: **Maag-Zahnräder und -Maschinen Aktiengesellschaft, Hardstrasse 219, CH-8023 Zürich (CH)**

(72) Erfinder: **Sterkl, Armin, Rinderweid 3, CH-8707 Uetikon/a.S. (CH)**
Erfinder: **Sommer, Gerd Robert, Hätschenstrasse 19, CH-8953 Dietikon (CH)**

## Zahnradmeßmaschine

Die Erfindung betrifft eine Zahnradmeßmaschine mit Antrieben für Relativbewegungen zwischen einem zu messenden Zahnrad und einem an ein elektronisches Steuer- und Auswertgerät mit Taktgenerator angeschlossenen Taster, nämlich einem Drehantrieb für Relativbewegungen um die Achse des Zahnrades, einem Axialantrieb für geradlinige Relativbewegungen in Richtung der Achse des Zahnrades und einem Tangentialantrieb für geradlinige Relativbewegungen in Richtung einer Tangente an den Grundkreis des Zahnrades, wobei jeder dieser Antriebe einen Servomotor und einen Tachogenerator, die einen Geschwindigkeitsregelkreis bilden, sowie einen Positionsgeber aufweist, und mit einer elektronischen Korrekturschaltung, welche die von den Positionsgebern festgestellten Positions-Istwerte miteinander vergleicht und entsprechend den dadurch ermittelten Positionsfehlern die vom Taster abgegebenen Meßsignale korrigiert.

Bei bekannten Zahnradmeßmaschinen dieser Gattung (US-A-3 741 659 sowie Prospekt »microlog-50« der Firma The Fellows Gear Shaper Company, Springfield Windsor, Vermont USA) wird beispielsweise für eine Zahnprofilmessung das gewünschte Evolventenprofil des zu messenden Zahnrades im elektronischen Steuer- und Auswertgerät gespeichert und von diesem in einen theoretischen Weg übersetzt, längs dessen der Taster bewegt werden muß, um einen vorgegebenen Abstand zwischen sich und der jeweils zu prüfenden Zahnflanke bei laufendem Drehantrieb und Tangentialantrieb einzuhalten. Das elektronische Steuer- und Auswertgerät erzeugt dann die Signale, die erforderlich sind, um entsprechend koordinierte Drehungen des Zahnrades um seine Achse und Tangentialverschiebungen eines den Taster tragenden Schlittens hervorzurufen. Gleichzeitig wertet das Steuer- und Auswertgerät elektrische Signale aus, die vom Taster erzeugt werden und dessen Stellung in bezug auf die zu messende Zahnflanke als Abweichung vom vorgegebenen Abstand des Tasters von dieser Zahnflanke angeben. Dabei werden die von den Positionsgebern des Drehantriebs und des Tangentialantriebs abgegebenen Signale vom Steuer- und Auswertgerät ständig mit der theoretischen Winkelstellung des zu messenden Zahnrades bzw. der theoretischen Stellung des den Taster tragenden Tangentialschlittens verglichen und jede Abweichung der tatsächlichen von der theoretischen Stellung bewirkt Korrekturen der vom Taster abgegebenen Signale mit dem Ergebnis, daß Fehlersignale aufgezeichnet werden, die, von Fehlern der Meßmaschine weitgehend befreit, die Ungenauigkeiten der gemessenen Zahnflanke angeben.

Eine andere bekannte Zahnradmeßmaschine (DE-A-2 354 248) hat ebenso wie die im vorstehenden beschriebene Maschine drei Antriebe für Relativbewegungen zwischen Taster und zu messendem Zahnrad, nämlich einen Drehantrieb, einen Axialantrieb sowie einen Tangentialantrieb, die je einen Positionsgeber aufweisen. Axialantrieb und Tangentialantrieb sind neben dem Drehantrieb wahlweise einschaltbar und haben je einen Regelkreis, der den Positionsgeber des betreffenden Antriebs enthält und in dem ein Positionswert des Drehantriebs eine Stellgröße bildet. Sämtliche Antriebe sind jedoch im Gegensatz zur gattungsgemäßen Maschine nicht von einem Taktgenerator gesteuert und wirken auch nicht mit Tachogeneratoren zusammen. Als Antriebe sind Gleichstrommotoren vorgesehen, die eine kleine mechanische Zeitkonstante aufweisen und somit unter dem Einfluß eines ihnen zugeführten Stellsignals ihre Drehzahl erhöhen oder verringern. Die vom Positionsgeber des Drehantriebs abgegebenen Signale werden in einem Zähler gezählt und in einem Rechner zu einem Sollwert für die Stellung des Axialantriebs oder des Tangentialantriebs verarbeitet, je nachdem, ob eine Zahnschrägungsmessung oder eine Zahnprofilmessung durchgeführt werden soll. Das Rechnerergebnis wird in einem Sollwertspeicher gespeichert und schließlich mit jeweils einem Signal aus einem dem Axial- bzw. Tangentialantrieb zugeordneten Istwertspeicher verglichen und schließlich in einem Steuerteil in ein Steuersignal für den betreffenden Axial- bzw. Tangentialantrieb umgewandelt. Diese Umwandlung geschieht jedoch ohne Rücksicht darauf, wieweit sich der Drehantrieb und der vom Steuerteil gesteuerte Axial- bzw. Tangentialantrieb während der Zählung, Auswertung und Speicherung sowie Vergleichung der von den Meßwertgebern des Drehantriebs einerseits und des gesteuerten Axial- bzw. Tangentialantriebs andererseits aufgenommenen Signale weiterbewegt haben. Somit erhält der gesteuerte Antrieb ständig Signale, die einer Sollstellung für einen mehr oder weniger weit zurückliegenden Zeitpunkt entsprechen. Schon dadurch entstehen Meßfehler. Ein weiterer Fehler, der unberücksichtigt bleibt, ergibt sich aus der Trägheit des jeweils eingeschalteten Axial- bzw. Tangentialantriebs.

Die somit auf zwei Ursachen beruhenden Fehler lassen sich bei der zuletzt beschriebenen bekannten Zahnradmeßmaschine nur dann in erträglichen Grenzen halten, wenn die Meßgeschwindigkeit gering gehalten oder die Messung intermittierend durchgeführt wird, so daß der Tasterschlitten jeweils Gelegenheit erhält, seine Sollstellung zu erreichen, ehe der Drehantrieb die Istposition verläßt, die der jeweiligen Berechnung der Sollposition des Tasterschlittens zugrundeliegt. Beide Auswege, die sich somit anbieten, um die beschriebenen Meßfehler zu eliminieren, erhöhen den Zeitbedarf für die Messungen erheblich, zumal bei großen Werkstücken, die wegen ihrer Massenträgheit nur sehr langsam beschleunigt und verzögert werden können und bei jeder Geschwindigkeitsänderung dazu neigen, das gesamte Meßsystem in Schwingungen zu versetzen, die zusätzliche Meßfehler hervorrufen.

Derartige Nachteile sind bei der eingangs beschriebenen bekannten gattungsgemäßen Zahnradmeßmaschine weitgehend vermieden; bei dieser Maschine ist jedoch ein erheblicher Aufwand für Datenspeicher und Rechner erforderlich, um die beschriebenen Daten zu speichern und miteinander in Beziehung zu setzen. Besonders erheblich ist der Aufwand, wenn anstelle einer Auswertung nach Abschluß der zugehörigen Messungen (off-line-Verfahren) eine Auswertung während des laufenden Meßvorgangs möglich sein soll (on-line-Verfahren). Der Erfindung liegt deshalb die Aufgabe zugrunde, eine Zahnradmeßmaschine der eingangs beschriebenen Gattung derart zu gestalten, daß Messungen an Zahnflanken, besonders Profil-, Zahnschrägungs- und Zahnteilungsmessungen höchster Genauigkeit, mit geringem Aufwand an Datenspeichern und Rechnern durchgeführt und bei den laufenden Messungen ausgewertet werden können.

Die Aufgabe ist erfindungsgemäß mit den kennzeichnenden Merkmalen des Anspruchs 1 gelöst.

Vorteilhafte Weiterbildungen der Erfindung ergeben sich aus den Unteransprüchen. Die dort beschriebenen Ausführungsformen der Erfindung sind zweckmäßigerweise miteinander kombiniert und ergeben dann eine Zahnradmeßmaschine, die wahlweise für Zahnprofilmessungen, Teilungsmessungen oder Zahnschrägemessungen eingestellt werden kann. In jedem Fall übernimmt einer der Antriebe, nämlich der vom Taktgenerator gesteuerte Antrieb, die Führung und macht einen anderen der beschriebenen Antriebe von sich abhängig, und zwar über eine äußerst einfach und mit geringem Aufwand durchführbare Multiplikation mit einem für die betreffende Messung ein für alle Mal einstellbaren Faktor. Dabei ist es unschädlich, wenn die Messung durchgeführt wird, ehe der abhängige Antrieb seine der Stellung des führenden Antriebs entsprechende Stellung erreicht hat, denn Soll-Ist-Abweichungen des abhängigen Antriebs werden von dem Signal subtrahiert, das bei der betreffenden Messung die Auslenkung des Tasters angibt.

Die Erfindung wird im folgenden anhand schematischer Zeichnungen eines Ausführungsbeispiels mit weiteren Einzelheiten erläutert. Es zeigt

Fig. 1 eine Schrägansicht einer Zahnradmeßmaschine,

Fig. 2 ein Blockdiagramm der zu der Maschine gehörigen Schaltung für Zahnprofilmessungen,

Fig. 3 ein Blockdiagramm der zu derselben Maschine gehörigen Schaltung für Teilungsmessungen an Zahnschnecken,

Fig. 4 ein Blockdiagramm der zu derselben Maschine gehörigen Schaltung für Zahnschräge-Messungen und

Fig. 5 Einzelheiten eines in den verschiedenen Blockdiagrammen mehrfach verwendeten Positionsreglers.

Die dargestellte Zahnradmeßmaschine hat die Aufgabe, an einem Prüfling 10, der ein Zahnrad, eine Schnecke oder dergleichen sein kann, Verzahnungsdaten wie das Verzahnungsprofil, die Zahnteilung oder die Zahnschräge zu messen und Soll-Ist-Abweichungen aufzuzeichnen.

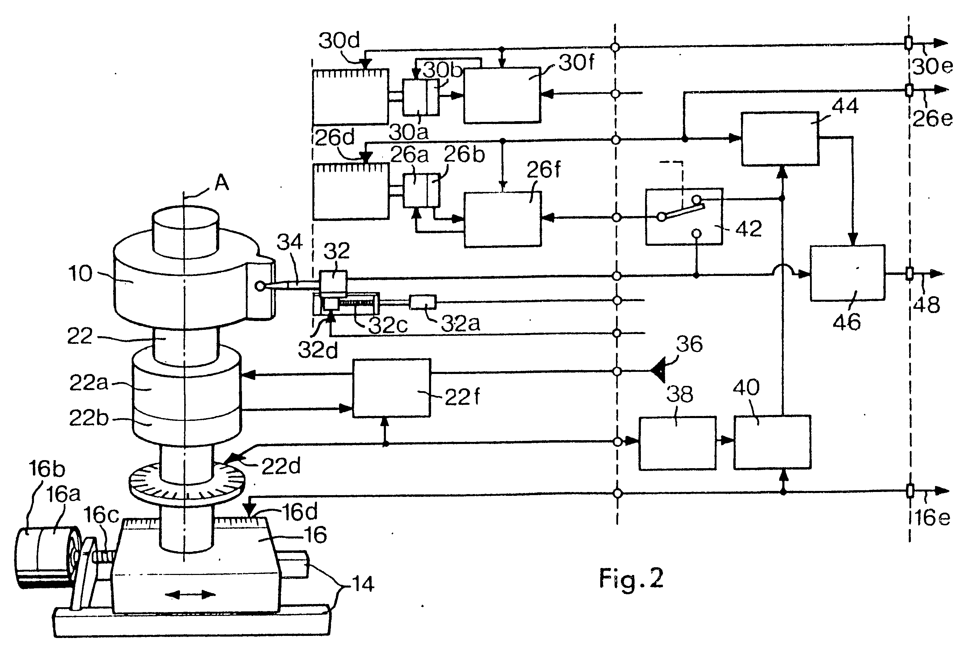

Die Zahnradmeßmaschine hat ein Maschinenbett 12 mit einer Radialführung 14, deren Bezeichnung so gewählt ist, weil sie sich in bezug auf die Achse A des Prüflings 10 radial erstreckt. In der Radialführung 14 ist ein Radialschlitten 16 geführt und mittels eines Radialantriebs verschiebbar. Das Bestimmungswort Radial unterscheidet den Radialschlitten 16 sowie den Radialantrieb und dessen Bestandteile im folgenden von anderen Schlitten, deren Antrieben und Bestandteilen. Zum Radialantrieb gehört ein Servomotor mit angeschlossenem Tachogenerator, beide von üblicher Bauart, die im folgenden aus dem genannten Grund als Radialservomotor 16a und Radialtachogenerator 16b bezeichnet werden. Der Radialservomotor 16a treibt den Radialschlitten 16 über eine Radialspindel 16c an; die Stellung des Radialschlittens 16 wird von einem Radialpositionsgeber 16d angegeben, der ebenfalls von üblicher Bauart und im dargestellten Beispiel ein längs der Radialführung 14 angeordnetes Strichgitter und einen am Radialschlitten 16 befestigten Ablesekopf aufweist und gemäß Fig. 2, 3 und 4 an einer nicht im einzelnen dargestellten Radialpositionsanzeige 16e angeschlossen ist.

Der Prüfling 10 ist auf dem Radialschlitten 16 zwischen Spitzen 18 gehalten. Die obere Spitze 18 ist an einem Gegenhalter 20 gelagert, der seinerseits auf dem Radialschlitten 16 befestigt ist. Die untere Spitze 18 ist auf einem Drehtisch 22 befestigt, der durch einen Drehservomotor 22a drehantreibbar ist. Dem Drehservomotor 22a ist ein Drehtachogenerator 22b und ein Drehpositionsgeber 22d zugeordnet. Es handelt sich auch hier um einen Servomotor, Tachogenerator sowie Positionsgeber üblicher Bauart, deren Bezeichnung zum Unterschied von weiteren Bauelementen gleicher Art das Bestimmungswort Dreh- vorangestellt ist. Dem Drehtisch 22 ist gemäß Fig. 2, 3 und 4 ferner ein Drehpositionsregler 22f zugeordnet.

Das Maschinenbett 12 weist ferner eine Tangentialführung 24 auf, deren Bezeichnung so gewählt ist, weil sie sich parallel zu einer Tangente an den Grundkreis des Prüflings 10 erstreckt. In der Tangentialführung 24 ist ein Tangentialschlitten 26 geführt, der mittels eines Tangentialservomotors 26a mit angeschlossenem Tangentialtachogenerator 26b über eine Tangentialspindel 26c in der Tangentialführung 24 verschiebbar ist. Dem Tangentialschlitten 26 ist ferner ein Tangentialpositionsgeber 26d, eine Tangentialpositionsanzeige 26e und ein Tangentialpositionsregler 26f zugeordnet.

Am Tangentialschlitten 26 ist eine Axialführung 28 ausgebildet, die sich parallel zur Achse A des zwischen den Spitzen 18 gehaltenen Prüflings 10 erstreckt. In der Axialführung 28 ist ein Axialschlitten 30 geführt und mittels eines Axialservomotors 30a mit angeschlossenem Axialtachogenerator 30b über eine Axialspindel 30c verschiebbar. Dem Axialschlitten 30 ist ferner ein Axialpositionsgeber 30d, eine Axialpositionsanzeige 30e und ein Axialpositionsregler 30f zugeordnet.

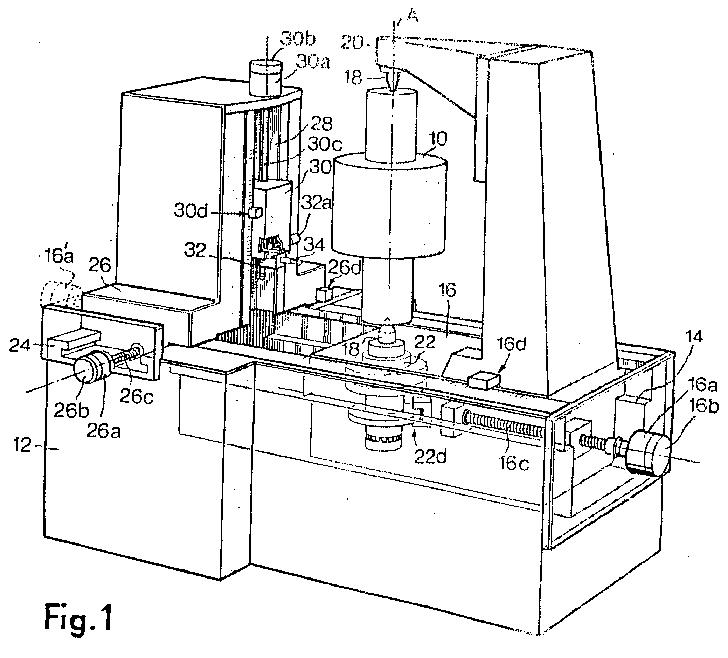

Auf dem Axialschlitten 30 ist ein Tasterschlitten 32 im rechten Winkel zur Tangentialführung 24 und zur Axialführung 28, also auch im rechten Winkel zur Achse A, verstellbar geführt und mittels eines Tasterschlitten-Motors 32a über eine Tasterschlitten-Zahnstange (Fig. 1) oder -spindel 32c (Fig. 2, 3 und 4) antreibbar. Dem Tasterschlitten 32 ist ferner ein Tasterschlitten-Positionsgeber 32d zugeordnet. Am Tasterschlitten 32 ist ein Taster 34 schwenkbar gelagert, der bei Auslenkungen aus seiner Ruhestellung in bekannter Weise Signale erzeugt.

Gemäß Fig. 1 läßt sich die Zahnradmeßmaschine also durch Verschieben des Radialschlittens 16 auf einen bestimmten Grundkreisradius des Prüflings 10 einstellen; diese Einstellung läßt sich mit der Radialpositionsanzeige 16e aufzeichnen. Sodann kann eine Abwälzbewegung zwischen dem Prüfling 10 und dem Taster 34 erzeugt werden, wobei der Prüfling 10 die rotatorische Komponente dieser Abwälzbewegung ausführt, indem er mit dem Drehtisch 22 um seine Achse A gedreht wird, während der Taster 34 die translatorische Komponente der Abwälzbewegung ausführt, indem der Tangentialschlitten 26 längs der Tangentialführung 24 verschoben wird. Alternativ kann der Taster 34 parallel zur Achse A bewegt werden, indem der Axialschlitten 30 längs der Axialführung 28 verschoben wird.

Die genannten Bewegungen können anders aufgeteilt sein, wenn dies im Hinblick auf die Größe des Prüflings 10 oder aus anderen Gründen zweckmäßig erscheint. So kann beispielsweise der Drehtisch 22 am Maschinenbett 12 ortsfest gelagert sein; in diesem Fall ist es erforderlich, daß der Tangentialschlitten 26 auf den erforderlichen Grundkreisradius einstellbar ist, beispielsweise indem er samt der Tangentialführung 24 auf einem Radialschlitten angeordnet ist. Diesem Radialschlitten müßte dann, wie in Fig. 1 links mit gestrichelten Linien angedeutet, ein Radialservomotor 16a' samt zugehörigen weiteren Bauelementen zugeordnet sein.

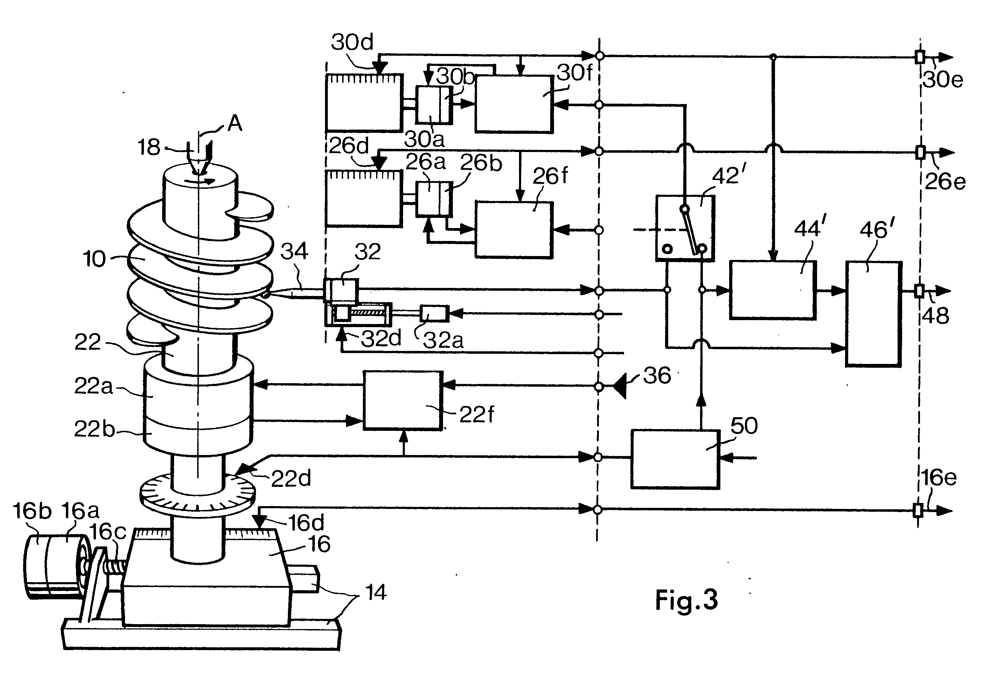

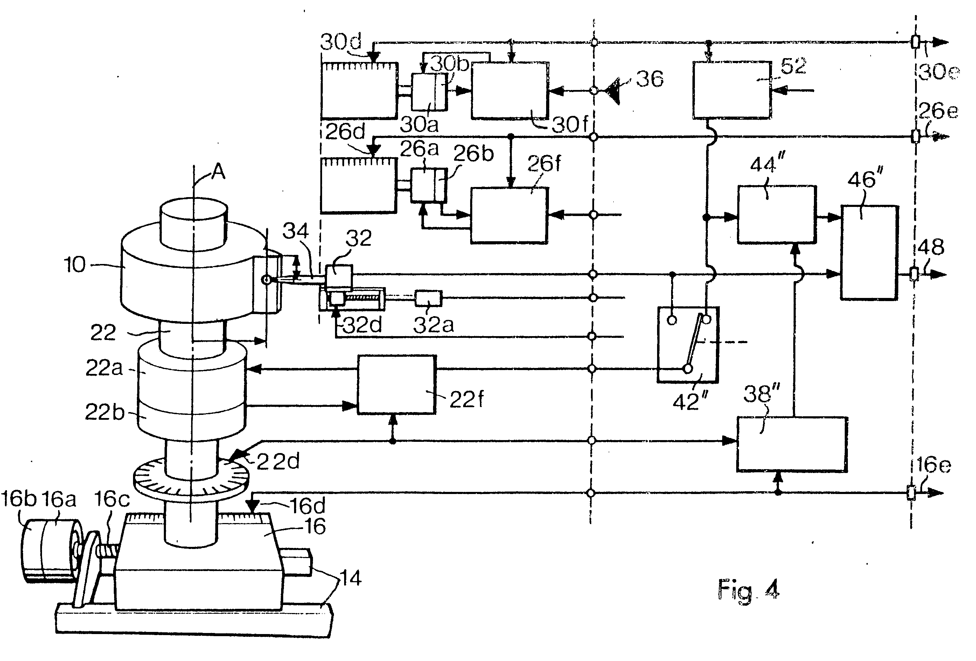

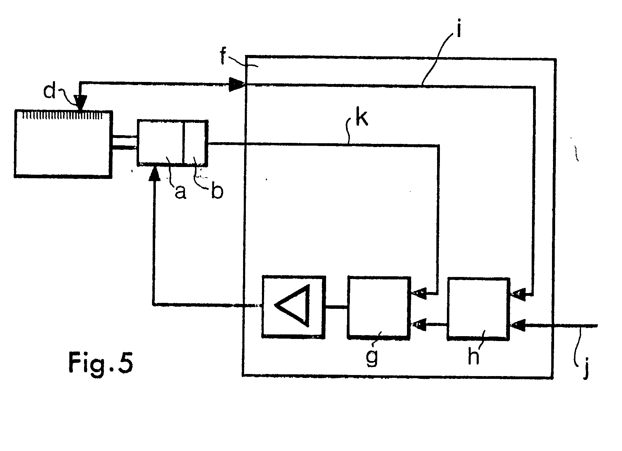

Jeder der erwähnten Positionsregler kann unabhängig davon, ob er dem Drehtisch 22, dem Tangentialschlitten 26 oder dem Axialschlitten 30 zugeordnet ist, den in Fig. 5 dargestellten prinzipiellen Aufbau haben, weshalb in Fig. 5 der Positionsregler insgesamt nur mit dem Buchstaben f bezeichnet ist und die ihm zugeordneten Bauelemente ebenfalls nur mit den bisher verwendeten Buchstaben ohne zugehörige Ziffern bezeichnet sind. So ist ein Servomotor a dargestellt, der von dem Positionsregler f Signale an einen Geschwindigkeitsregler g innerhalb des Positionsreglers f abgibt. Der zugehörige Positionsgeber d ist mit einem Wegregler h innerhalb des Positionsreglers f verbunden. Jeder Positionsregler f ist somit Bestandteil zweier Regelkreise, nämlich eines Geschwindigkeits-Regelkreises und eines Positions-Regelkreises, von denen der letztgenannte als Stellgröße den Positions-Istwert eines derjenigen Antriebe erhält, der von dem betreffenden Positionsregler f unabhängig ist, wie sich aus der folgenden Beschreibung von Einzelheiten der Fig. 2 einerseits, der Fig. 3 andererseits und schließlich der Fig. 4 ergibt.

Für Messungen des Zahnprofils des Prüflings 10 steuert ein Taktgenerator 36 den Drehtisch 22, so daß dieser die Führung übernimmt. Die vom Drehpositionsgeber 22d festgestellte Winkelstellung des Drehtisches 22 in bezug auf eine bestimmte Nullstellung wird von einem Bogenmaßumrechner 38 in das Bogenmaß, und von einem Tangentialstellungsrechner 40 durch Multiplikation mit dem eingestellten Grundkreisradius in eine Sollstellung umgerechnet, die der Tangentialschlitten 26 einnehmen müßte, wenn eine von Maschinenfehlern freie Abwälzbewegung stattfände. Das vom Tangentialstellungsrechner 40 abgegebene Signal wird einerseits über einen Umschalter 42 als Stellgröße dem Tangentialpositionsregler 26f und andererseits einem Korrektursignalrechner 44 zugeführt. Der Korrektursignalrechner 44 erhält außerdem ein der Iststellung des Tangentialschlittens 26 entsprechendes Signal und bildet durch Subtraktion der beiden ihm zugeführten Signale ein Korrektursignal, das einem Fehlerrechner 46 zugeführt wird. Der Fehlerrechner 46 erhält außerdem vom Taster 34 ein Signal, das dessen Auslenkung entspricht. Da diese Auslenkung einerseits vom Maschinenfehler und andererseits vom Fehler des Zahnprofils an der gemessenen Stelle abhängt, subtrahiert der Fehlerrechner 46 die beiden ihm zugeführten Signale voneinander, um den tatsächlichen Fehler der Verzahnung zu ermitteln. Dieser Fehler wird von einem Fehlerschreiber 48 registriert, und zwar in Abhängigkeit von der tatsächlichen Stellung des Tangentialschlittens 26, die von der Tangentialpositionsanzeige 26e registriert wird, während gleichzeitig die bei der Zahnprofilmessung unverändert bleibende Stellung des Axialschlittens 30 von der Axialpositionsanzeige 30e registriert wird.

Wenn der Prüfling 10 eine Zahnschnecke ist, deren Steigungsverlauf gemessen werden soll, dann bleibt es dabei, daß der Drehtisch 22 vom Taktgenerator 36 gesteuert wird. Das Signal des Drehpositionsgebers 22d wird gemäß Fig. 3 von einem Steigungsumrechner 50 durch Multiplikation mit einer Sollsteigung in eine Sollstellung des Axialschlittens 30 umgerechnet. Das Signal des Steigungsumrechners 50 wird einerseits über einen Umschalter 42' als Stellgröße dem Axialpositionsregler 30f und andererseits einem Korrektursignalrechner 44' zugeführt. Der Korrektursignalrechner 44 erhält außerdem ein die Iststellung des Axialschlittens 30 angebendes Signal vom Axialpositionsgeber 30d. Durch Subtraktion beider ihm zugeführten Signale bildet der Korrektursignalrechner 44' ein Korrektursignal, das einem Fehlerrechner 46' zugeführt wird. Der Fehlerrechner 46' erhält außerdem vom Taster 34 ein dessen Auslenkung angebendes Signal und ermittelt durch Subtraktion beider Signale den Steigungsfehler, der wiederum vom Fehlerschreiber 48 in Funktion der Axialposition registriert wird.

Beim Messen der Zahnschräge des Prüflings 10 steuert der Taktgenerator 36 den Axialschlitten 30, so daß dieser die Führung übernimmt. Die Signale des Axialpositionsgebers 30d werden einerseits vom Axialpositionsschreiber 30e registriert und andererseits in einem Drehwinkelumrechner 52 durch Multiplikation mit dem Tangens des Soll-Schrägungswinkels des Prüflings 10 in ein Drehwinkelsignal umgerechnet, das einerseits über einen Umschalter 42" als Stellgröße dem Drehpositionsregler 22f und andererseits einem Korrektursignalrechner 44" zugeführt wird. Der Korrektursignalrechner 44" erhält als zweites Signal ein vom Drehpositionsgeber 22d und Bogenmaßrechner 38" stammendes Signal über die Iststellung des Drehtisches 22. Aus beiden ihm zugeführten Signalen bildet der Korrektursignalrechner 44" ein Korrektursignal, das er an einen Fehlerrechner 46" abgibt. Der Fehlerrechner 46" erhält wiederum als zweites Signal ein vom Taster 34 abgegebenes Signal und berechnet durch Subtraktion beider Signale den Zahnschrägungsfehler, der wiederum vom Fehlerschreiber 48 in Funktion der Axialposition aufgezeichnet wird.

Die Umschalter 42, 42' und 42" ermöglichen es, dem Positionsregler desjenigen Antriebs, der von einem anderen Antrieb abhängig gemacht werden soll, Signale unmittelbar vom Taster 34 zuzuführen, um vor Beginn der eigentlichen Messung festzustellen, ob die mögliche Tasterauslenkung zum Messen der Fehler ausreicht oder die Relativstellung der beschriebenen Bauteile, beispielsweise die Stellung des Tasterschlittens 32 vor der Messung zu korrigieren ist. Es können somit auch Prüflinge mit großen Fehlern und/oder unbekannten Eingabe- und Einstellwerten gemessen werden.

**Patentansprüche**

1. Zahnradmeßmaschine mit Antrieben für Relativbewegungen zwischen einem zu messenden Zahnrad (10) und einem an ein elektronisches Steuer- und Auswertgerät mit Taktgenerator (36) angeschlossenen Taster (34), nämlich

— einem Drehantrieb (22a, b) für Relativbewegungen um die Achse (A) des Zahnrades (10),

— einem Axialantrieb (30a, b) für geradlinige Relativbewegungen in Richtung parallel zur Achse des Zahnrades und

— einem Tangentialantrieb (26a, b) für geradlinige Relativbewegungen in Richtung einer Tangente an den Grundkreis des Zahnrades,

— wobei jeder dieser Antriebe einen Servomotor (22a, 26a, 30a) und einen Tachogenerator (22b, 26b, 30b), die einen Geschwindigkeitsregelkreis (k) bilden, sowie einen Positionsgeber (22d, 26d, 30d) aufweist und wobei aus dem Positions-Istwert eines vom Taktgenerator (36) angesteuerten ersten Positionsgebers durch Umrechnung eine Stellgröße für einen der anderen Antriebe gewonnen wird,

— und mit einer elektronischen Korrekturschaltung (44, 46), welche den Sollwert mit dem vom anderen Positionsgeber festgestellten Positions-Istwert vergleicht und entsprechend dem dadurch ermittelten Positionsfehler die vom Taster (34) abgegebenen Meßsignale korrigiert, dadurch gekennzeichnet, daß mindestens einer der genannten Antriebe zusätzlich einen Positions-Regelkreis (i) aufweist, der den Servomotor (22a, 26a, 30a) des betreffenden Antriebs und den zugehörigen Positionsgeber (22d, 26d, 30d) enthält und in dem der aus dem Positions-Istwert des vom Taktgenerator (36) gesteuerten Antriebs berechnete Sollwert (j) eine Stellgröße bildet.

2. Zahnradmeßmaschine nach Anspruch 1, dadurch gekennzeichnet, daß für Zahnprofilmessungen der Drehantrieb (22a, 22b) unabhängig von den übrigen Antrieben vom Taktgenerator (36) gesteuert ist und der Positions-Istwert des Drehantriebs nach Multiplikation mit dem Grundkreisradius die Stellgröße des Positions-Regelkreises des Tangentialantriebs (26a, 26b) bildet (Fig. 2).

3. Zahnradmeßmaschine nach Anspruch 1, dadurch gekennzeichnet, daß für Teilungsmessungen an Zahnschnecken der Drehantrieb (22a, 22b) unabhängig von den übrigen Antrieben vom Taktgenerator (36) gesteuert ist und der Positions-Istwert des Drehantriebs nach Multiplikation mit der Steigung der Zahnschnecke die Stellgröße des Positions-Regelkreises des Axialantriebs (30a, 30b) bildet (Fig. 3).

4. Zahnradmeßmaschine nach Anspruch 1, dadurch gekennzeichnet, daß für Zahnschräge-Messungen der Axialantrieb (30a, 30b) unabhängig von den übrigen Antrieben vom Taktgenerator (36) gesteuert ist und der Positions-Istwert des Axialantriebs nach Multiplikation mit dem Tangens des Zahnschrägungswinkels die Stellgröße des Positions-Regelkreises des Drehantriebs (22a, 22b) bildet (Fig. 4).

**Claims**

1. Gear testing machine with drives for relative movements between a gear (10) to be testend and a sensor (34) connected to an electronic control and evaluation device with impulse generator (36), namely

— a rotary drive (22a, b) for relative movements about the axis (A) of the gear (10),
— an axial drive (30a, b) for rectilinear relative movements in a direction parallel to the axis of the gear and
— a tangential drive (26a, b) für rectilinear relative movements in the direction of a tangent to the pitch circle of the gear,
— whilst each of these drives exhibits a servomotor (22a, 26a, 30a) and a tachogenerator (22b, 26b, 30b), which form a speed control loop (k), and a position transducer (22d, 26d, 30d), and whilst an actuating cariable for one of the other drives is obtained by conversion from the actual position value of a first position transducer modulated by the impulse generator (36),
— and with an electronic correction circuit (44, 46) which compares the desired value with the actual position value determined by the other position transducer and corrects the test signals delivered by the sensor (34) according to the position error thereby ascertained, characterized in that at least one of the said drives additionally exhibits a position control loop (i) which contains the servomotor (22a, 26a, 30a) of the relevant drive and the associated position transducer (22d, 26d, 30d) and in which the desired value (j) calculated from the actual position value of the drive controlled by the impulse generator (36) forms an actuating variable.

2. Gear testing machine according to Claim 1, characterized in that for tooth profils tests the rotary drive (22a, 22b) is controlled by the impulse generator (36) independently of the other drives and the actual position value of the rotary drive after multiplication by the pitch circle radius forms the actuating variable of the position control loop of the tangential drive (26a, 26b) (Fig. 2).

3. Gear testing machine according to Claim 1, characterized in that for pitch tests in worms the rotary drive (22a, 22b) is controlled by the impulse generator (36) independently of the other drives and the actual position value of the rotary drive after multiplication by the pitch of the worm forms the actuating variable of the position control loop of the axial drive (30a, 30b) (Fig. 3).

4. Gear testing machine according to Claim 1, characterized in that for tooth angle tests the axial drive (30a, 30b) is controlled by the impulse generator (36) independently of the other drives and the actual position value of the axial drive after multiplication by the tangent of the tooth angle forms the actuating variable of the position control loop of the rotary drive (22a, 22b) (Fig. 4).

**Revendications**

1. Machine à mesurer les engrenages, comprenant des entraînements pour l'exécution de déplacements relatifs entre l'engrenage (10) à mesurer et un palpeur (34) relié à un appareil électronique de commande et de traitement équipé d'un générateur de rythme (36), à savoir:

— un entraînement de rotation (22a, b) pour l'exécution de mouvements relatifs de rotation autour de l'axe (A) de l'engrenage (10),
— un entraînement axial (30a, b) pour l'exécution de mouvements relatifs rectilignes dans une direction parallèle à l'axe de l'engrenage et,
— un etraînement tangentiel (26a, b) pour l'exécution de mouvements rectilignes dans la direction d'une tangente au cercle de pied de denture de l'engrenage,
— chacun de ces entraînements comprenant un servomoteur (22a, 26a, 30a) et une génératrice tachymétrique (22b, 26b, 30b) qui forment ensemble une boucle de régulation de vitesse (k), ainsi qu'un capteur de position (22d, 26d, 30d), une grandeur réglante pour l'un des autres entraînements étant obtenue pour conversion, à partir de la valeur effective de la position d'un premier capteur de position commandé par le générateur de rythme (36),
— et la machine comprenant également un circuit de correction électronique (44, 46) qui compare la valeur de consigne à la valeur effective de position constatée par l'autre capteur de position et corrige les signaux de mesure émis par le palpeur (34) en fonction des erreurs de position ainsi obtenues, caractérisée en ce qu'au moins l'un des entraînements comporte une deuxième boucle de régulation de position (i), qui comprend le servomoteur (22a, 26a, 30a) de l'entraînement considéré et le capteur de position (22d, 26d, 30d) appartenant à cet entraînement, boucle de régulation dans laquelle la valeur de consigne (j) calculée à partir de la valeur effective de la position de l'etraînement commandé par le générateur de rythme (36) constitue une grandeur réglante.

2. Machine à mesurer les engrenages selon la revendication 1, caractérisée en ce que, pour les mesures de profil de denture, l'entraînement en rotation (22a, 22b) est commandé par le générateur de rythme (36) indépendamment des autres entraînements, et la valeur effective de la position de l'entraînement de rotation forme, après multiplication par le rayon du cercle de base de la denture, la grandeur réglante de la deuxième boucle de régulation de position de l'entraînement tangentiel (26a, 26b) (Fig. 2).

3. Machine à mesurer les engrenages selon la revendication 1, caractérisée en ce que, pour les mesures de pas de denture sur les vis sans fin, l'entraînement en rotation (22a, 22b) est commandé par le générateur de rythme (36) indépendamment des autres entraînements, et la valeur effective de position de l'entraînement de rotation forme, après multiplication par le pas de la vis, la grandeur réglante de la boucle de régulation de position de l'entraînement axial (30a, 30b) (Fig. 3).

4. Machine à mesurer les engrenages selon la revendication 1, caractérisée en ce que, pour les mesures de l'angle d'inclinaison des dentures obliques, l'entraînement axial (30a, 30b) est commandé par le générateur de rythme (36) indépendamment des autres entraînements et la valeur effective de la position de l'entraînement axial forme, après multiplication par la tangente de l'angle d'inclinaison de la denture, la grandeur réglante de la boucle de régulation de l'entraînement de rotation (22a, 22b) (Fig. 4).

Fig.1

Fig.2

0 016 721

Fig.3

Fig 4

Fig.5